## Europäisches Patentamt
## European Patent Office
## Office européen des brevets

(19)

(11) Veröffentlichungsnummer: **0 163 147**
**B1**

(12) **EUROPÄISCHE PATENTSCHRIFT**

(45) Veröffentlichungstag der Patentschrift: 05.09.90

(51) Int. Cl.⁵: **B 21 D 26/10,** A 61 C 1/00, E 21 C 37/00

(21) Anmeldenummer: 85105235.7

(22) Anmeldetag: 30.04.85

(54) Druckerzeuger.

(30) Priorität: 28.05.84 DE 3419816

(43) Veröffentlichungstag der Anmeldung:
04.12.85 Patentblatt 85/49

(45) Bekanntmachung des Hinweises auf die Patenterteilung:
05.09.90 Patentblatt 90/36

(84) Benannte Vertragsstaaten:
AT CH FR GB IT LI

(56) Entgegenhaltungen:
DE-A-2 610 061
DE-B-1 806 283
FR-A-2 083 363
US-A-3 332 510
US-A-3 634 040

(73) Patentinhaber: DORNIER GMBH
Postfach 1420
D-7990 Friedrichshafen 1 (DE)

(72) Erfinder: Müller, Hans-Gerhard, Dr.
Sommerweg 18
D-7990 Friedrichshafen 24 (DE)

(74) Vertreter: Landsmann, Ralf, Dipl.-Ing.
c/o DORNIER GMBH Postfach 1420
D-7990 Friedrichshafen 1 (DE)

Courier Press, Leamington Spa, England.

## Beschreibung

Die Erfindung betrifft eine Vorrichtung zur Erzeugung hoher Drucke nach dem Oberbegriff des Anspruchs 1.

Eine Vorrichtung dieser Art ist schon aus der DE—A—2610061 bekannt.

Bekannt ist im Bergbau zum Bohren oder zum Tunnelbau der Einsatz von Diamantbohrern oder das Sprengen. Die erste Lösung ist relativ teuer und die Bohrleistung ist gering, so daß ein relativ hoher Zeitaufwand notwendig ist. Dem Sprengen steht eine prinzipiell geringe Präzision entgegen.

Bekannt ist in der Umformtechnik die Materialumformung oder Bearbeitung durch Sprengen in geschlossenen Behältern ohne Fokussierung. Es können daher keine extremen Drucke erreicht werden.

Bekannt ist in der Zahntechnik zur Behandlung von Karies das mechanische Ausbohren des Zahnschmelzes.

Aus der DE—A—26 10 061 ist ein Reflektor bekannt, der Stößwellen, die von einem metallischen Draht als linienförmiger Stoßwellenquelle ausgehen, auf einen Brennpunkt fokussiert. Der Brennpunkt liegt außerhalb des Reflektors.

Aufgabe der Erfindung ist es, eine Vorrichtung zur Erzeugung hohen Druckes für den Bergbau, für die Materialbearbeitung oder Materialumformung und für die Zahnmedizin zu schaffen, mit der extrem hohe Drucke bei ausreichender Präzision und bei hohen Frequenzen erzeugt werden können.

Diese Aufgabe wird erfindungsgemäss gelöst von Vorrichtungen mit den in den Ansprüchen genannten Merkmalen.

Erfindungsgemäss wird eine zylindrische Stoßwelle erzeugt und fokussiert. Dazu wird von der linear-aktustischen Näherung ausgegangen. In dieser Näherung kann die Ausbreitung strahlengeometrisch beschrieben werden und es gilt das normale Reflexionsgesetz: Einfallswinkel = Aufallenwinkel. Damit ergibt sich für die Fokussierung einer von einer Linienquelle ausgehenden Zylinderwelle auf einen Punkt die erfindungsgemässe Reflektoranordnung. Die Erfindung liefert eine technisch einsetzbare Vorrichtung zur Fokussierung zylindrischer Stößwellen. Diese können — wei seit langem aus dem Anwendungsgebiet "Explosionsumformen" bekannt ist — durch Drahtexplosionen in Wasser (oder in anderen geeigneten Flüssigkeiten) erzeugt werden. Da die Energiefreisetzung in deisem Fall nicht punktförmig sondern auf einer Linie erfolgt, liegt der erreichbare Gesamtenergieinhalt um Grössenordnungen über dem von nahezu punktförmigen Funkenstreckenentladungen.

Durch die Fokussierung dieser hohen Gesamtenergie wird ein "Machstamm" extrem hohen Druckes und entsprechend hoher Energiedichte erzeugt. Möglich ist der Einsatz einer solchen Vorrichtung zur Gesteinszerkleinerung bei Bohrungen und beim Tunnelbau. Ausserdem ist die Umformung kleinerer Materialstücke mit extremalen Drucken möglich. Die Vorrichtung eignet sich in geeigneter Grösse auch zum Einsatz bei der präzisen Abtragung von Zahnschmelz in der Zahnmedizin.

Der erfindungsgemässe Reflektorkörper vereinigt alle längs der Linienquelle entstehenden Stoßwellenanteile phasenrichtig im Brennpunkt. Er kann somit extrem hohe Drucke und Energiestromdichten in Fokusnähe erzielen.

Eine Steigerung des Fokussierungsgrades lässt sich durch eine Optimierung des Reflektors unter Berücksichtigung der Stoßwelleneigenschaften erreichen. Diese Optimierung kann bei prinzipieller Aufrechterhaltung der Rotationssymmetrie — ausser eventuell in der Randzone, in der zur besseren Fokussierung der Randstrahlen nach innen von der Kugelfläche abgewichen werden kann — durch Übergang auf von der Parabel zu einer weniger weit sich aufweitenden Form erfolgen. Da der schon stärker konzentrierte Stoßwellenanteil aus dem inneren Bereich sich aufgrund des höheren Druckes schneller ausbreitet, kann durch Reduktion der Laufstrecke der äusseren Strahlen eine stärkere Fokussierung erreicht werden. Dabei muss dann die Form auf die Stärke der Stoßwellen abgestimmt werde. Je höher die Amplitude der primären zylindrischen Stoßwelle ist, desto stärkere Abweichungen von der Parabelform können vorgesehen werden.

In einer vorteilhaften Ausführung ist die das Paraboloid erzeugende Kurve nur im Bereich um den Scheitelpunkt als Parabel bzw. parabelähnlich und in den Seitenbereichen als Gerade, die senkrecht zum Draht verläuft, ausgebildet. Bei Rotation dieser Kurve um die Linienquelle ensteht ein fassförmiger Reflektor, wobei das "Fassdauben" parabelförmig sind, eventuell etwas weniger weit offen, um den Laufzeitunterschied bei hohen Drucken auszugleichen.

Als Stoßwellenquelle sind zündbare Drähte vorgesehen, die durch Anlegen einer hohen Spannung (>10 kV) verdampft werden.

Wichtig für die technische Anwendbarkeit einer solchen Anordnung ist die erreichbare Wiederholfrequenz für die Stoßwellenerzeugung. Kritisch ist im Fall von Drahtexplosionen des Einführen und Einfädeln eines neuen Drahtstükkes. Hier könnte auf ein von der Firma Siemens [Hammann, J. F., et al., BMFT-Bericht T76—78 (1976)] vorgeschlagenes und erprobtes Verfahren zurückgegriffen werden. Dabei wird ein für die Drahtexplosion erforderlicher sehr dünner Draht entweder in einem extrem stabilen Kunststoffträger eingebettet (z.B. Perlon od. ähnl.) oder durch die leitfähige Beschichtung eines solchen Kunststoffträgers ersetzt. Die Versuche mit diesen Trägern haben gezeigt, dass sie nicht zerstört werden und ein Nachladen durch einfaches automatisierbares Nachziehen erfolgen kann.

Das Nachladen kann entweder durch die Zündung des Drahtes, durch die Hochspannung (induktiv) oder von einem Stoßwellensensor getriggert erfolgen.

Möglich ist der kontinuierliche Durchzug des Drahtes, wobei eine Stoßwellenerzeugung immer erst dann augelöst wird, wenn vor dem Reflektor ein vollständiges Stück metallischen Drahtes ist.

Eine Möglichkeit der Drahtnachführung ist ein Schwenkmechanismus, bei dem ein Bügel — vorzugsweise ein Teil des Reflektors — durch den Stoßwellendruck verschwenkt wird und dabei den noch vorhandenen Faden um eine Reflektorlänge weiterzieht.

Eine weitere Möglichkeit der Drahtnachführung, die auch dann anwendbar ist, wenn der Draht restlos verdampft, ist eine Führungsvorrichtung, bei der sich der Reflektor unter der Rückstosswirkung auf einer schraubenförmigen Bahn zurückbewegt und federbelastet auf einer zweiten schraubenförmigen Bahn wieder an seinen Ausgangspunkt gelangt und dabei jeweils eine Vierteldrehung ausführt. So vertauschen die beiden Halterungen des Drahtes ihre Positionen und ein an einer Halterung eingeklemmter Draht wird von einer Vorratsrolle vor den Reflektor gezogen und gespannt. Solche Drehmechanismen sind an sich bereits aus Kugelschreibermechaniken bekannt.

Eine weitere Möglichkeit der Drahtnachführung — auch bei restloser Drahtexplosion — ist die Nachführung von vorgefertigten Drahtstücken der richtigen Länge aus einem Magazin. Dies kann über einen Hilfsantrieb (Feder) erfolgen oder zum Beispiel mittels zwei an den Drahtenden befestigten schweren Kugeln, die durch die Schwerkraft die Drahtstücke in die vorgesehene Position an den Halterungen am Reflektor bringen und die Drahtstücke spannen und/oder ihnen elektrischen Kontakt geben. Der Drahtwechsel kann dabei auch unter Ausnutzung eines Rückstoß-Rücklauf des Reflektors (ohne Drehung) erfolgen.

Möglich ist die Drahtnachführung über ein rotierendes Magazin, das mehrere Speichen aufweist, zwischen deren Enden Draht eingeklemmt ist, wobei nach jeder Zündung das Magazin sich um eine Speichenentfernung weiterdreht und damit ein neues Drahtstück vor den Reflektor bringt.

Zur Fokussierung der Stoßwelle ist es notwendig, dass ein übertragendes Medium den Reflektor füllt. Wasser hat sich als geeignetes Medium herausgestellt. Der Reflektor kann vorteilhafterweise auch ständig von frischen Wasser durchspült werden, wobei dann — zum Beispiel in der Anwendung als Bohrer oder Gesteinszerkleinerer — gelöstes Material gleich mit dem abgesaugten Wasser entfernt werden kann.

Als Bohrwerkzeug im Bergbau kann ein Bohrkopf hergestellt wer-den, der an seiner Spitze mehrere der erfindungsgemässen Rotationsparaboloide aufweist, die auch unterschiedlich ausgerichtet sein können. Vorteilhaft ist ein Drehung des Bohrkopfes mit einer der Stoßwellenfolge angepasten Frequenz.

Für die Anwendung als Umformwerkzeug für kleine Werkstücke kann ein Fliessbandmechanismus vorgesehen sein, der durch die offene Ausführung mit Fokussierung der Stoßwelle ermöglicht wird. Nach der Entlandung weicht das Paraboloid zurück, das umgeformte Werkstück wird abtransportiert, ein umzuformendes in die Formmulde eingelegt, ein neuer Draht gespannt; dann geht das Paraboloid wieder vor und die nächste Entladung erfolgt.

Die Erfindung wird anhand von sieben Figuren näher erläutert.

Es zeigen:

Figuren 1 bis 3 verschiedene Ausführungsformen von erfindungsgemässen Vorrichtungen,

Figur 4 zwei Drahtquerschnitte,

Figuren 5 bis 7 drei Nachführmechanismen für den Draht.

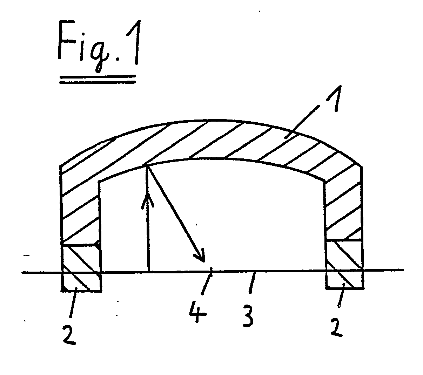

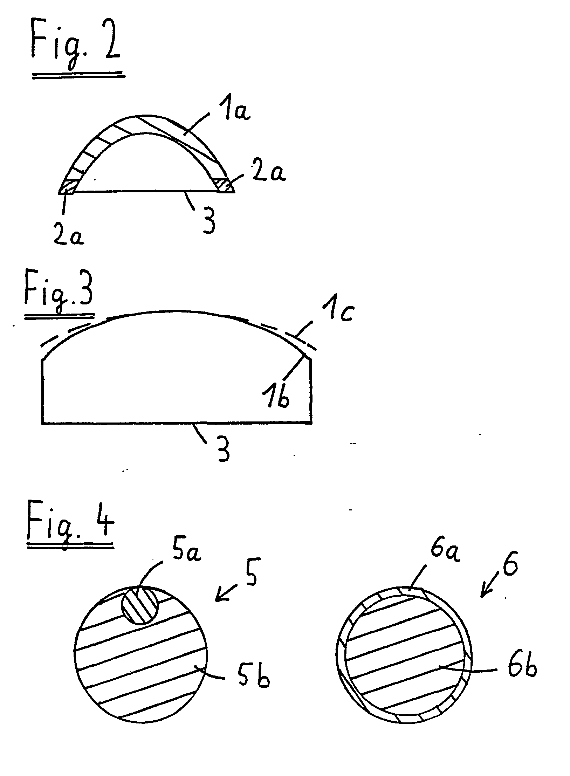

Figure 1 zeigt eine erfindungsgemässe Vorrichtung zur Erzeugung hoher Drucke mit einem Reflektor 1, der die Form eines halben Rotationsparaboloids aufweist, auf dessen Rotationsachse die linienförmige Stoßwellenquelle, hier der Draht 3, liegt und dessen Brennpunkt 4 ebenfalls auf dieser Achse liegt. Der Draht 3 wird von zwei isolierenden Halterungen 2 gehalten und gespannt. Aus der Figur ist der parabelförmige Verlauf der Reflektorfläche zu erkennen. Die Reflektorfläche ist in Schnittebenen senkrecht zum Draht 3 halbkreisförmig (nicht gezeigt) ausgebildet.

Erfindungsgemäss werden die extrem hohen Drucke im Brennpunkt 4 durch Anlegen einer hohen Spannung an den Draht 3 erzeugt. Der Draht explodiert dabei. An jeder Stelle des Drahtes 3 entsteht im den Reflektor 1 füllenden Koppelmedium, z.B. Wasser, eine Stoßwellenfront, die sich senkrecht zum Draht 3 ausbreitet. Der eingezeichnete Pfeil zeigt die Ausbreitungsrichtung einer erzeugten Stoßwellenfront zum Reflektor 1 und von dort zum Brennpunkt 4. Durch die erfindungsgemässe Reflektorform (Parabel in einer Ebene, Kreis in der Ebene senkrecht dazu) werden die Stoßwellenanteile aller Drahtinkremente, die in den Halbraum oberhalb des Drahtes 3 abgestrahlt werden, phasenrichtig in den Brennpunkt 4 vereinigt.

Figur 2 zeigt eine weitere Ausführungsform einer erfindungsgemässen Vorrichtung mit dem parabelförmigen Reflektor 1a, an dessen Halterungen 2a der Draht 3 befestigt ist. Im Gegensatz zu der in Figure 1 gezeigten Ausführung ist der Reflektor 1a durchgehand als Parabel ausgebildet.

Figur 3 zeigt den Verlauf der Innenkontur eines weiteren Reflektors 1b, der sich durch eine weniger ausladende Öffnung von dem gestrichelt gezeichenten Parabelverlauf 1c unterscheidet. Diese Ausführung verkürzt die Wege für aussen entstehende Stoßwellen. Diese Ausführung sorgt bei hohen Drucken für eine phasenrichtige Fokussierung.

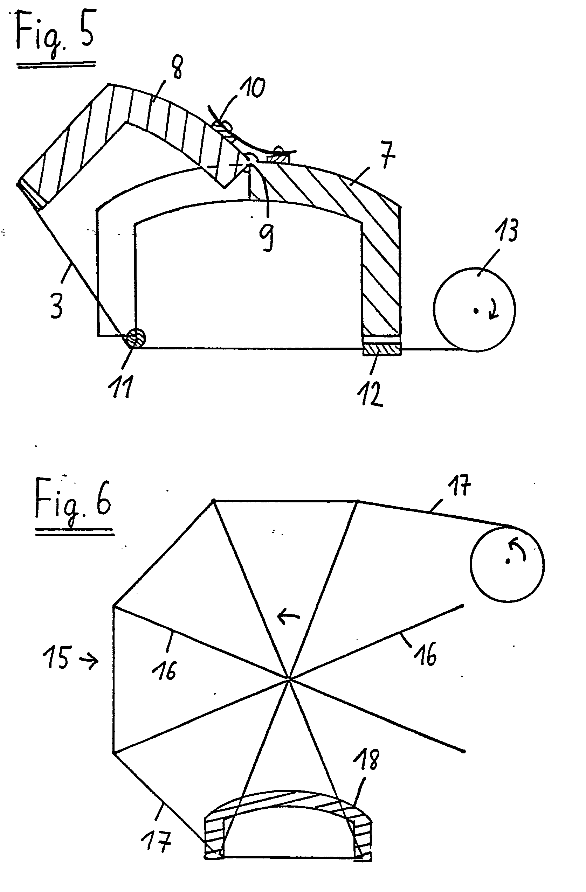

Figur 4 zeigt links einen Drahtquerschnitt 5, bei dem der metallische Leiter 5a in einem stärkeren Perlondraht 5b eingebettet ist. Die Figur zeigt rechts eine Ausführung des Drahtes 6, bei dem der metallische Leiter als Beschichtung 6a um einen Kunststoffkern 6b herumgelegt ist. Beide Kunststoffträger überstehen die Explosion der metallischen Bestandteile und erlauben so eine einfaches Weiterziehen des Drahtes.

Figure 5 zeigt eine Vorrichtung zum Nachführen des Drahtes mittels Stoßwellenenergie. Am Reflektor 7 ist ein Arm 8 angebracht, der um eine Gelenk 9 verschwenkbar ist. Die Verschwenkbewegung wird durch die Blattfeder 10 gedämpft. Beim Verschwenken zieht der Arm 8 ein neues Stück des Drahtes 3 von der Vorratsrolle 13. Der Draht 3 wird dabei durch die Führung 12 und über die Rolle 11 an den Enden des Reflektors 7 geführt.

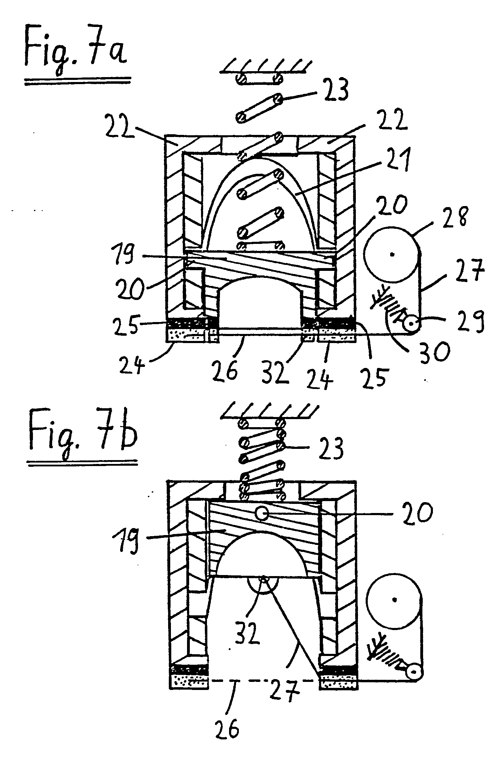

Figur 6 zeigt eine weitere Ausführung einer erfindungsgemässen Vorrichtung mit Drahtnachführung, wobei ein rotierendes Magazin 15 vorgesehen ist. An den Enden der Speichen 16 ist der Draht 17 eingespannt. Nach jeder Zündung einer Drahtexplosion im Reflektor 18 wird das Magazin 15 um eine Speichenbreite, die der Breite des Reflektors 18 entspricht, weitergedreht.

Figuren 7a und 7b zeigen eine Ausführung der Erfindung, bei der der Draht durch eine vom Rückstoss veranlasste Rücklauf-Drehbewegung mit 180° Drehung ausgewechselt wird.

Figur 7a zeigt einen Reflektor 19 mit Führungselementen 20, die in schräg nach oben verlaufenden Schienen 21 eines zylindrischen Gehäuses 22 geführt werden. Der Reflektor wird von einer Feder 23 in der in Figur 7a gezeigten Stellung gehalten. Reflektor 19 und Gehäuse 22 sind durch die Isolierungen 25 gegen die Stromzuführungen 24 abgeschirmt. Die Linie 26 zeigt die Position des Drahtes 27 bei der Stoßwellenerzeugung. Ein Ende eines Drahtes 27 ist in der Klemme 32 eingeklemmt. Der Draht 27 kommt von einer Vorratsrolle 28 und ist von der Rolle 29 und der Feder 30 straff gehalten.

Wird an die Stromzuführungen 24 eine hohe Spannung gelegt, so verdampft das auf der Linie 26 liegende Drahtstück und erzeugt Stoßwellen. Der Rückstoß bewegt den Reflektor 19 nach oben, die schräg verlaufenden Schienen drehen den Reflektor 19 beim Rücklauf um 90°.

Figur 7b zeigt den Reflektor 19 am Ende des Rücklaufs. Der von der Klemme 32 gehaltene Draht 27 verläuft jetzt schräg nach oben. Durch die Feder 23 wird der Reflektor 29 anschließend wieder nach unten gedrückt und dreht sich dabei um weitere 90°, so dass das neue Drahtstück wieder auf der Linie 26 liegt. Die Vorrichtung ist für eine weitere Zündung fertig.

**Patentansprüche**

1. Vorrichtung zur Erzeugung hoher Drucke, wobei die Vorrichtung einen zündbaren zumindest teilweise aus Metall bestehenden Draht (3) als linienförmige Stoßwellenquelle und einen mit einem Koppelmedium, wie Wasser, gefüllten Reflektor (1) umfaßt, der die Stoßwellen auf einen Brennpunkt (4) fokussiert, dadurch gekennzeichnet, daß der Reflektor (1) die Form eines halben Rotationsparaboloids aufweist, auf dessen Rotationsachse die Stoßwellenquelle liegt und dessen Brennpunkt (4) auf dieser Achse liegt, und daß eine Vorrichtung zum Nachführen des Drahtes (3) vorgesehen ist.

2. Vorrichtung nach Anspruch 1, dadurch gekennzeichnet, daß als linienförmige Stoßwellenquelle ein Draht (5, 6) verwendet wird, der aus einem stabilen Kunststoffträger (5b, 6b) und einem metallischen Anteil (5a, 6a) besteht.

3. Vorrichtung nach einem der vorhergehenden Ansprüche, dadurch gekennzeichnet, daß die das Paraboloid erzeugende Kurve nur im Bereich ihres Scheitels als Parabel ausgebildet ist und in den Seitenbereichen als senkrechte Gerade ausgebildet ist, so daß der Reflektorkörper Faßform aufweist.

4. Vorrichtung nach einem der vorhergehenden Ansprüche, dadurch gekennzeichnet, daß die das Paraboloid erzeugende Kurve eine sich etwas weniger aufweitende Form als eine Parabel aufweist.

5. Vorrichtung nach Anspruch 2, dadurch gekennzeichnet, daß die Erneuerung des Kunststoffdrahtes durch einen Elektromotor nach jeder Zündung erfolgt.

6. Vorrichtung nach Anspruch 2, dadurch gekennzeichnet, daß die Nachführung der Stoßwellenquelle durch einen kontinuierlichen Drahtdurchzug erfolgt.

7. Vorrichtung nach einem der vorhergehenden Ansprüche, dadurch gekennzeichnet, daß ein schwenkbarer Arm (8) durch die Druckwirkung der Stoßwellen den Draht (3) nachzieht.

8. Vorrichtung nach einem der vorhergehenden Ansprüche, dadurch gekennzeichnet, daß die Erneuerung des Drahtes durch eine Rückstoß-Rücklauf-Drehbewegung des Paraboloids um 180° mit einem einseitigem Einklemmen des Drahtes erfolgt.

9. Vorrichtung nach einem der vorhergehenden Ansprüche, dadurch gekennzeichnet, daß der Drahtwechsel durch Nachladen aus einem Magazin erfolgt, wobei fertige Drahtstücke mit an den Enden befestigten schweren Kugeln verwendet werden können.

10. Vorrichtung nach Anspruch 9, dadurch gekennzeichnet, daß zum Drahtwechsel der Rückstoß-Rücklauf des Reflektorkörpers verwendet wird.

11. Vorrichtung nach einem der vorhergehenden Ansprüche, dadurch gekennzeichnet, daß das Nachladen des Drahtes über ein rotierendes Magazin (15) erfolgt, das nach jeder Zündung ein neues Drahtstück vor den Reflektor (18) spannt.

12. Vorrichtung nach Anspruch 1, dadurch gekennzeichnet, daß das Koppelmedium ständig zugeführt und abgesaugt wird.

13. Verwendung mehrerer Vorrichtungen nach einem der vorhergehenden Ansprüche an einem Bohrkopf, wobei die Reflektoren in verschiedene Richtungen ausgerichtet sind.

**Revendications**

1. Dispositif pour la génération de pressions élevées, comprenant un fil (3) explosible constitué au moins en partie de métal en tant que source d'ondes de choc linéaire et un réflecteur (1) rempli d'un milieu de couplage par exemple de l'eau, qui focalise les ondes de choc dans un foyer (4), caractérisé en ce que le réflecteur (1) présente la forme d'un demi-paraboloïde de révolution sur l'axe de révolution duquel se situe la source d'ondes de choc et dont le foyer (4) se trouve sur cet axe, et qu'il est prévu un dispositif pour l'avancement du fil (3).

2. Dispositif selon la revendication 1, caractérisé en ce qu'il utilise comme source d'ondes de choc linéaire un fil (5, 6) constitué d'un support stable en matière plastique (5b, 6b) et d'une partie métallique (5a, 6a).

3. Dispositif selon l'une des revendications précédentes, caractérisé en ce que la courbe générant le paraboloïde n'est conformée en parabole que dans la région de son sommet et qu'elle se présente sous la forme d'une droit verticale dans les régions latérales, de sorte que le corps du réflecteur présente la forme d'un tonneau.

4. Dispositif selon l'une des revendications précédentes, caractérisé en ce que la courbe générant le paraboloïde présente une form qui s'élargit légèrement moins qu'une parabole.

5. Dispositif selon la revendication 2, caractérisé en ce que le renouvellement du fil en matière plastique est assuré après chaque allumage par un moteur électrique.

6. Dispositif selon la revendication 2, caractérisé en ce que l'avancement de la source d'ondes de choc est réalisé par un entraînement continu du fil.

7. Dispositif selon l'une quelconque des revendications précédentes, caractérisé en ce qu'un bras pivotant (8) fait avancer le fil (3) par l'effet de pression des ondes de choc.

8. Dispositif selon l'une des revendications précédentes, caractérisé en ce que le renouvellement du fil est réalisé par un mouvement de recul-retour-rotation du paraboloïde de 180° avec serrage unilatéral du fil.

9. Dispositif selon l'une des revendications précédentes, caractérisé en ce que le changement de fil se fait par rechargement à partir d'un magasin, avec la possibilité d'utiliser des sections de fil toutes prêtes avec de lourdes boules fixées aux extrémités.

10. Dispositif selon la revendication 9, caractérisé en ce que le recul-retour du corps du réflecteur est utilisé pour le changement de fil.

11. Dispositif selon l'une des revendications précédentes, caractérisé en ce que le rechargement du fil est réalisé par l'intermédiaire d'un magasin tournant (15) qui, après chaque allumage, tend un nouvelle section de fil devant le réflecteur (18).

12. Dispositif selon la revendication 1, caractérisé en ce que le milieu de couplage est amené et aspiré en permanence.

13. Utilisation d'une pluralité de dispositifs selon l'une des revendications précédentes sur une tête de forage, les réflecteurs étant orientés dans différentes directions.

## Claims

1. Device for producing high pressures, the device comprising an ignitable wire (3), consisting at least partially of metal, as a linear shock wave source and a reflector (1) which is filled with a coupling medium, such as water, which focuses the shock waves on a focus (4), characterised in that the reflector (1) has the shape of a semi-paraboloid of revolution, on the rotational axis of which the shock wave sources lies and the focus (4) of which lies on this axis; and in that a device for following-up the wire (3) is provided.

2. Device according to Claim 1, characterised in that a wire (5, 6), which consists of a stable plastics material carrier (5b, 6b) and a metal portion (5a, 6a), is used as a linear shock wave source.

3. Device according to one of the preceding Claims, characterised in that the curve producing the paraboloid is only formed as a parabola in the vicinity of its apex and is formed as a perpendicular straight line in the side areas such that the reflector body has the shape of a barrel.

4. Device according to any one of the preceding Claims, characterised in that the curve producing the paraboloid has a shape which broadens somewhat less than a parabola.

5. Device according to Claim 2, characterised in that the plastics material wire is renewed by an electric motor after each ignition.

6. Device according to Claim 2, characterised in that the shock wave source is followed up by the wire being continually passed through.

7. Device according to any one of the preceding Claims, characterised in that a pivotable arm (8) tightens the wire (3) as a result of the pressure effect of the shock waves.

8. Device according to any one of the preceding Claims, characterised in that the wire is renewed by a recoil-return-rotational movement of the paraboloid through 180° with the wire being clamped on one side.

9. Device according to any one of the preceding Claims, characterised in that the wire is exchanged by recharging from a magazine, it being possible for finished wire pieces with heavy balls secured at the ends to be used.

10. Device according to Claim 9, characterised in that the recoil-return of the reflector body is used for changing the wire.

11. Device according to one of the preceding Claims, characterised in that the wire is recharged by means of a rotating magazine (15) which stretches a new piece of wire in front of the reflector (18) after each ignition.

12. Device according to Claim 1, characterised in that the coupling medium is constantly delivered and drawn-off.

13. Use of a plurality of devices according to any one of the preceding Claims on a boring head, the reflectors being arranged in different directions.

Fig.1

Fig. 2

1a

2a

2a

3

Fig. 3

1c

1b

3

Fig. 4

5a

5

5b

6a

6

6b

**Fig. 5**

**Fig. 6**

Fig. 7a

Fig. 7b

4